# EUROPEAN PATENT APPLICATION

(11) **EP 0 541 814 A1**
(43) Date of publication of application: **19.05.1993**
(21) Application number: 92907022.5
(22) Date of filing: 21.03.1992
(51) Int. Cl.: C08G 8/10, C08G 14/02, B32B 27/04, B32B 27/42, B32B 5/28, C08J 9/42, C08J 9/40, C08J 5/24

(54) **STRUCTURAL MATERIAL**

(30) Priority: 22.03.1991 JP 83091/91
(71) Applicant: NAGOYA OILCHEMICAL CO., LTD., Tokai-shi, Aichi 476 (JP)
(72) Inventor: HORIKI, Seinosuke, Nagoya Oilchemical Co., Ltd., Tokai-shi, Aichi 476 (JP); ITO, Kuninori, Nagoya Oilchemical Co., Ltd., Tokai-shi, Aichi 476 (JP)
(74) Representative: Cresswell, Thomas Anthony
(86) International application number: JP9200348
(87) International publication number: WO9216572

(57) **Abstract**

A structural material formable at low temperature, prepared by mixing a porous material with a methylol compound which acts as a binder and excipient, a resorcinol compound and/or a precondensate comprising the resorcinol compound and formaldehyde. The methylol group of the methylol compound reacts with the resorcinol compound and/or the precondensate at low temperature in a a short period of time to cause curing. Accordingly, a structural material of this invention can be formed at low temperature.

## Description

### [FIELD OF THE INVENTION]

The present invention relates to a material for a structure which is used for the interiors of vehicles such as cars and the like, and for building materials and the like.

### [DESCRIPTION OF THE PRIOR ART]

Hitherto, the material for a structure wherein phenolic resin is mixed in a synthetic fiber, glass fiber, wood fiber, and the like and the resulting mixture molded to a desirable shape with heating to cure the phenolic resin, has been provided.

Nevertheless, as the curing temperature of phenolic resin as the binder is very high, about 200°C , the heat energy efficiency in the manufacturing process is very low and it is difficult to effect a heat press mold on the material together with the surface material for mounting or designing having a low heat resistance such as polyvinyl-chloride leather, polypropylene non-woven material and the like, and further, it is feared that the fiber is damaged by the high temperature during molding. Further, the cured phenolic resin has the disadvantage of a hard and brittle mechanical property.

Accordingly, to provide a binder which can be cured at a low temperature and the resulting cured binder which has proper flexibility and rigidity is a very significant technical problem at present, and if such a binder is used, the manufacturing expenses may be reduced, and the advantage that attaching the surface material and molding the material for a structure are carried out at the same time may be obtained.

### [DISCLOSURE OF THE INVENTION]

As a means to disclose the above described problems in the prior art, the present invention provides a material for a structure which is produced by adding a binder mixture consisting of a compound containing a methylol group and a resorcinol compound and/or a primary condensation product of the resorcinol compound and formaldehyde in a porous material, and molding the above described porous material with heating to cure the condensation product.

### [BRIEF DESCRIPTION OF THE DRAWINGS]

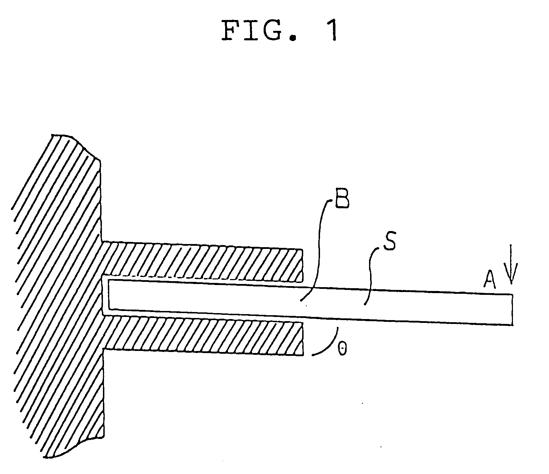

Fig 1 is a side sectional view to explain the flexibility test in EXAMPLES 6 and 7, and COMPARISON 2.

In the DRAWING,
S .......test piece

### [DETAILED DESCRIPTION OF THE INVENTION]

### COMPOUND CONTAINING A METHYLOL GROUP

The compound containing a methylol group used in the present invention is a compound such as methylol urea, methylolthio urea, methylol melamine, a primary condensation product of methylol urea, a primary condensation product of methlolmelamine, a primary condensation product of phenol and formaldehyde, a primary condensation product of cresol and formaldehyde, a primary condensation product of xylenol and formaldehyde, a primary copoly condensation product of methylol urea and methylol melamine, a primary copoly condensation product of methylol urea and phenol, a primary copoly condensation product of methylol melamine and phenol, methylol acetamide, methylol acrylamide and the like, and further, a part or all of the methylol group of the compound may produce dimethylene ether bond. The above described examples should not limit the scope of the present invention.

### [RESORCINOL COMPOUND]

The resorcinol compound used in the present invention is a resorcinol or alkyl resorcinol such as resorcinol, 5-methylresorcinol, 5-ethylresorcinol, 5-propylresorcinol, 5-n-butylresorcinol, 4,5-dimethylresorcinol, 2,5-dimethylresorcinol, 4,5-diethylresorcinol, 2,5-diethylresorcinol, 4,5-dipropylresorcinol, 2,5-dipropylresorcinol, 4-methyl-5-ethylresorcinol, 2-ethyl-5-methylresorcinol, 2-methyl-5-ethyresorcinol, 2,4,5-trimethylresorcinol, 2,4,5-triethylresorcinol, and the like and a mixture of two or more kinds of the resorcinol compound. The above described examples should not limit the scope of the present invention.

Further, in the present invention, a primary condensation product of the resorcinol compound and formaldehyde can be used and further, a mixture of one or more kinds of the resorcinol compound and one or more kinds of the primary condensation product can also be used.

Alkyl resorcinol produced by the dry distillation of oil shale (shale oil resorcinol) or a condensation product of shale oil resorcinol, and formaldehyde is an especially suitable resorcinol compound since the shale oil resorcinol is provided at a low price and the condensation product of the shale oil resorcinol and formaldehyde is quickly cured and the resulting cured condensation product has excellent water resistance, heat resistance, and durability.

Further, in the above described primary condensation product, one or more kinds of compound, such as phenol, cresol, xylenol, methylenebisphenol, alkylphenol, catechol, alkylcatechol, hydroquinone, alkyl hydroquinone, pyrozallol, phloroglucinol, urea, melamine, thiourea, benzoguanamine, toluen, xglene, coumarone, cyclohexane, cyclohexanone, cashew oil, tannin, dammer gum, shellac, rosin, rosin derivative, petroleum resin, methanol, ethanol, isopropanol, butanol, ethylene glycol, polyethlene glycol, glycerine, furfural alcohol, furan, linseed oil, tungoil, castor oil and the like may be used as a denaturing agent or as a copolycondensation agent, or mixed. The above described examples should not limit the scope of the present invention.

Further, in the process of the condensation reaction to produce the primary condensation product, a compound containing a carbonyl group such as acetone, caprolactam, methylol carbamide and the like may be added.

### [OTHER COMPONENT]

In the present invention, besides the compound containing a methylol group and a resorcinol compound and/or a primary condensation product of the resorcinol compound and formaldehyde, rubber such as natural rubber, natural rubber derivative, SB, AB, ABS, SBR, NBR, CR, EPT, isoprenerubber, isoprene-isobutylene rubber and the like emulsion or latex or an aqueous solution of natural or synthetic resin such as vinylacetate resin, polyvinylacetate ethylene-vinylacetate copolymer, acrylic resin, methacrylic resin, polyvinyl-chloride resin, polyvinylidene chloride resin, polystyrene, polyethylene, polypropylene, chlorinated polyethylene, chlorvinated polypropylene, polyester resin, polyurethane resin, polyamide resin, epoxy resin, polyvinyl butyral resin, polyacrylic acid, polyacryl amide, polyvinyl alcohol and the like; an allulose derivative such as methylcellulose, car boxymethylcellulose, hydroxy-methylcellulose, hydroxyethylcellulose and the like; sodium alginate, starch, starch devivative, protein such as gelatine, glue, blood powder and the like; calcium carbonate, talc, carbon black, silica, wood powder, walnut shell powder, coconutshell powder, flour, rice powder and the like; a pigment, dyestuff, antiseptic, insecticide, antioxidant, ultraviolet absorber, plasticizer such as DBP, DOP, dicycohexyl phthalate, tricresylphosphate, and the like; a flame-retardant such as diantimony trioxide, aluminium hydroxyde, brominecompound, and the like; a release agent or water repellent such as wax, silicone resin, and the like; blowing agent such as a chemical blowing agent, a capsule type blowing agent, and the like may be added to the binder.

The above described examples should not limit the constituents of the present invention. Further, two or more kinds of these compounds may be added to the binder.

In these compounds, in a case where emulsion or latex of a synthetic resin or rubber having flexibility is added to the binder, it is possible to suitably control the hardness of the resulting cured binder and the material for a structure using these components as the flexibility and brittleness of the material for a structure is remarkably improved compared to a case where phenolic resin is used as binder.

### [CURING AGENT]

If desirable, an aldehyde donor may be used as a curing agent in the present invention. Examples of the aldehyde donor may be formaldehyde, parafolmaldehyde, trioxane, acetaldehyde, propionaldehyde, polyoxymethylene, chloral, fulfural, glyoxal, n-butylaldehyde, caproaldehyde, benzaldehyde, acrolein, tetraoxymethylen, phenylacetaldehyde, O-tolualdehyde, m-tolualdehyde, p-tolualdehyde, salicylaldehyde, hexamethylenetetramine, and the like or a mixture of two or more kinds of the above described aldehyde donors. These examples should not limit the scope of the present invention.

In the above described aldehyde donors hexamethylenetetramine may is one of the desirable aldehyde donors since hexamethylenetetramine decomposes at about 130°C , so the binder is not cured by this curing agent at a room temperature but when this curing agent is cured at a higher temperature than 130°C , this curing agent is decomposed to produce aldehyde and the binder is curing by this cured agent.

Accordingly, when this curing agent is used, a long pot-life of the binder is obtained, so this curing agent is advantageously used as the pot-life is preserved for a long time.

Further, instead of the aldehyde donor or with the aldehyde donor acid catalyst or alkaline catalyst may be used in the present invention.

### [PREPARATION]

In the present invention, the mixing ratio of the compound containing a methylol group and the resorcinol compound and/or a primary condensation product of the resorcinol compound and formaldehyde is usually 99.5:0.5 to 10:90 by weight ratio, and in a case where the aldehyde donor is used as a curing agent the aldehyde donor is usually added to the binder mixture in a ratio of 95:5 by weight ratio. In the binder mixture, the compound containing a methylol group and the resorcinol compound and/or a primary condensation product of the resorcinol compound and formaldehyde may be reacted together by heat curing. Further, in the process of methylolation to produce the compound containing the methylol group, the resorcinol compound and/or the primary condensation product may be added.

### [POROUS MATERIAL]

The porous material used in the present invention may be web produced by the carding of fiber, fleece or felt produced by a fleece machine or a needle pinching machine, fiber sheet produced by the paper making of slurry containing the fiber, knitting or fabrics of fiber, non-woven fabrics and the like, the fiber may be synthetic fiber such as polyester fiber, aliphatic or aromatic polyamide fiber, acrylic fiber, polyolefine fiber, polyvinylidenechloride fiber, polyvinylchloride fiber, polyurethane fiber, polyvinylalcohol fiber, rayon, cupra, acetate, and the like; wood fiber such as pulp, wood flake and the like, natural fiber such as cotton, palm fiber, wood, silk and the like; reclaimed fiber of synthetic fiber or natural fiber, inorganic fiber such as glass fiber, rock fiber, ceramic fiber, carbon fiber and the like; plastic rubber foam such as natural rubber foam, synthetic rubber foam, polypropylene foam, polyvinylchloride foam, polyethylene foam, phenolic resin foam, amino resin foam such as melamine resin foam, urea resin foam, and the like. The above described examples should not limit the scope of the present invention.

Two or more kinds of the above described porous materials may be mixed together, or one or more kinds of the above described porous materials are laminated together, and further, in a case where the reinforcing material is preferably laminated on one or both sides of the porous material or between the laminated porous material, the mechanical strength, abrasion resistance, durability, appearance and the like of the porous material will be obtained.

### [REINFORCING MATERIAL]

In the present invention, a reinforcing material may be used to reinforce the porous material. The reinforcing material may include such as knit or fabrics, or non-wooven fabrics, lawn, and the like of inorganic or organic fiber, net such as wire net and the like; metal material such as a metal frame, a metal panel and the like, reclaimed paper, plastic sheet and the like.

### [MANUFACTURING THE MATERIAL FOR A STRUCTURE]

To manufacture the material for a structure of the present invention, a solution mixture consisting of the compound containing methylol and the resorcinol compound and/or the primary condensation product of the resorcinol compound and formaldehyde and if desirable, other components described above and an aldehyde donor, acid catalyst or alkaline catalyst as the curing agent is impregnated in the porous material by spraying, roll coating, dipping and the like or in a case where the porous material is made of a fiber material, a powder mixture consisting of the compound containing methylol and the resorcinol compound and/or the primary condensation product of the resorcinol compound and formaldehyde is mixed with the fiber material in the carding process, fleecing process or needle punching process, and in the case of paper making the powder or solution mixture of the compound containing methylol and the resorcinol compound and/or the primary condensation product of the resorcinol compound and formaldehyde is added to the slurry of the fiber.

In a case where a laminated porous material is used, the solution mixture may be applied or impregnated in the laminated porous material or the solution mixture may be applied or impregnated in each porous material before lamination. After the solution mixture is impregnated in the porous material, the porous material is dried at room temperature or by heating and if desirable, the mixture may be semi-cured during heating to produce the pre-preg. Further, in a case where the reinforcing material is laminated on one or both sides of the porous material, the reinforcing material may be laminated on the porous material before or after the mixture is impregnated in the porous material. Further, if desirable, the reinforcing material impregnating the mixture may be laminated with the porous material impregnating the mixture. To laminated the reinforcing material on the porous material, pressure-sensitive adhesive, hot-melt type adhesive, ordinal adhesive, and the like may be used, but in a case where the mixture is impregnated in the reinforcing material, these adhesives are not always necessary.

Further, in a case where the porous material is made of a material having a low tensile strength, such as polyurethane foam, glass wool, felt and the like, or a material easily swelled by impregnating the solution mixture, it is preferable that the reinforcing material is laminated on the porous material before impregnation of the mixture to prevent slip or delamination between the reinforcing material and the porous material, and in this case, continuation of the manufacturing process is easily applied and even in the drying process, slip or delamination between the reinforcing material and the porous material is effectively prevented.

Further, in a case where the fiberous reinforcing material is laminated on the fiberous porous material, it is preferable to differ the directions of the fibers between the reinforcing material and the porous material, and in a case where two or more kinds of fibrous porous materials are laminated, it is also desirable to differ the directions of the fibers between each porous material. In these cases, the mechanical strength of the material for a structure may be increased.

To mold the above described porous material or laminated porous material, in a case where the binder mixture is impregnated in the porous material, the porous material is molded by a hot-press after drying to reduce it to a suitable water content or without drying and after cutting or without cutting for continuous molding. Further, if necessary, the porous material upon which a surface material for mounting or designing is put may be molded by a hot-press to laminate the surface material on the porous material at the same time. Still further, the surface material and/or the reinforcing material may be laminated on the porous material after the porous material is molded by a hot-press. The impregnation ratio of the binder mixture in the porous material may be commonly 5 to 300 parts by weight for 100 parts by weight of the porous material or the reinforcing material.

The binder mixture consisting of a compound containing one or those of the methylol group and the resorcinol compound and/or a primary condensation product of the resorcinol compound and formaldehyde is cured by heating at a low temperature, lower than 150°C , for a short time.

Accordingly the porous material or the laminated porous material in which the binder mixture is added and molded by a hot-press at a low temperature, lower than 150°C and the resulting molded porous material has excellent flexibility, water resistance, heat resistance, durability, and the like.

As above described, since the material for a structure of the present invention can be molded at a lower temperature than the prior material for a structure in which phenolic resin is used as a binder, the heat energy efficiency in the manufacturing process may be much improved and the water resistance, heat resistance, durability, and the like of the material are also much improved, and further, by using the reinforcing material, the mechanical strength of the material is also improved in the present invention. Further the resorcinol resin can be denatured by other synthetic resins or synthetic rubbers, and in such case, a material having an excellent mechanical structure, rigidity and flexibility may be manufactured, and the porous material can be molded together with the surface material in the present invention. In the prior art, it may be impossible to mold to the porous material together with the surface material.

### [EXAMPLE 1]

To 100 parts by weight (hereafter simply described as part(s), of 50% by weight of an aqueous solution of a mixture of a primary condensation product of phenol formaldehyde and resorcinol (90:10 weight ratio), 50 parts of water was added and after the mixture was completely desolved in the water, 10 parts of the above described solution was impregnated in a porous material made of a polyester fiber and having a thickness of 10 mm, by coating an amount of 10 parts of the solution for 100 parts of the porous material, and the above described porous material was dried at 80°C for 20 minutes and then molded by a hot-press under various conditions. The results are shown in TABLE 1.

### [EXAMPLE 2]

Molded porous materials were prepared by the same method as EXAMPLE 1 using 50% by weight of an aqueous solution of a mixture of a primary condensation product of phenol and formaldehyde and alkylresorcinol (90:10 weight ratio). The results are also shown in Table 1.

### [COMPARISON]

Molded porous materials were prepared by the same method as EXAMPLE 1 using 50% by weight of an aqueous solution of a resol type primary condensation product of phenol formaldehyde diluted by 50 parts of water. The results are shown in Table 1.

**[TABLE 1]**

| Samples | Press temperature (°C) | Press time | Molding state |
|---|---|---|---|
| EXAMPLE 1 | 1 5 0 | 3 | Ⓞ |
| | | 1 | Ⓞ |
| | 1 3 5 | 3 | ⃝ |
| | | 1 | ⃝ |
| EXAMPLE 2 | 1 5 0 | 3 | Ⓞ |
| | | 1 | Ⓞ |
| | 1 3 5 | 3 | Ⓞ |
| | | 1 | Ⓞ |
| EXAMPLE 1 | 1 5 0 | 3 | △ |
| | | 1 | X |
| | 1 3 5 | 3 | X |
| | | 1 | X |

### Molding condition:

The porous materials impregnated with the mixtures (thickness 10 mm) were respectively molded by a hot-press at temperature of 150°C or 135°C for 3 minutes or 1 minute to respectively reduce the thickness to 2 mm.

### Molding state:

- Ⓞ :: The condensation product in the binder mixture was completely cured and the porous material was uniformly molded.
- ⃝ :: The porous material was uniformly molded, but had a few soft parts.
- △ :: The circumference of the porous material could be molded, but swelling parts were partially recognized in the center part of the porous material.
- X :: The porous material was difficult to mold and when the molding pressure was released, the porous material swelled.

According to the results shown in TABLE 1, it is recognized that in the traditional case, phenol resin was used as the binder, when the porous material was molded at a temperature lower than 150°C , the porous material was difficult to be completely molded. On the contrary, the porous materials of the present invention were molded at a low temperature. Especially, it is recognized that the porous material using the copoly condensation product of alkylresorcinol · phenol formaldehyde containing the methylol group as a binder was easily molded at a lower temperature for a shorter time.

### [EXAMPLE 3]

65% by weight of an aqueous solution of a mixture of methylolmelamine and 5-methylresorcinol (98:2 weight ratio) was impregnated in polyurethane foam sheet having a thickness of 15 mm as a porous material by coating in an amount of 30 parts of the solution for 100 parts of the polyurethane foam sheet, and the above described polyurethane foam was dried at 85°C for 15 minutes and then molded by a hot-press. The results are shown in TABLE 2.

### [EXAMPLE 4]

A net consisting of a polyester fiber as a reinforcing material was laminated on both sides of the polyurethane foam of EXAMPLE 3 wherein the binder mixture was coated on the net, and the above described reinforced polyurethane foam was molded by a hot-press. The results are shown in TABLE 2.

**[TABLE 2]**

| Samples | Interval between drying and molding | Molding state | Bending strength (kg/cm²) |
|---|---|---|---|
| EXAMPLE 3 | Directly after | Ⓞ | 50 |
| | 1 hour | Ⓞ | 61 |
| | 3 hours | Ⓞ | 52 |
| | 1 day | Ⓞ | 60 |
| | 7 days | Ⓞ | 61 |
| | 20 days | Ⓞ | 53 |
| | Directly after | Ⓞ | 118 |
| EXAMPLE 4 | 1 hour | Ⓞ | 125 |
| | 3 hours | Ⓞ | 130 |
| | 1 day | Ⓞ | 124 |
| | 7 days | Ⓞ | 120 |
| | 20 days | Ⓞ | 123 |

### Molding condition:

A hot-press at 140°C for 1 minute was employed and the resulting thickness of the molded porous materials was reduced respectively to 2.5 mm.

### Interval between drying and molding:

After drying, each sample was kept at room temperature (20 to 25°C ) for a predetermined time and then molded.

### Bending strength:

After molding, each sample was kept for 48 hours at room temperature and a test piece (50 x 150 mm) was cut from each sample. For each strength test a load was effected on the test piece at a compression speed of 50 mm/min and the strength was determined.

### Molding state:

- Ⓞ :: The condensation product in the binder mixture was completely cured and the porous material was uniformly molded.

Referring to the results shown in TABLE 2, it is recognized that the single porous material that was molded was used aduquately as a material for a structure, but the porous material laminated with the reinforcing material had a higher mechanical strength.

### [EXAMPLE 5]

30 parts of alkylresorcinol for 100 parts of phenol was added to a reaction mixture to produce a primary condensation product of phenol formaldehyde, and 45 parts resulting in an aqueous solution dissolved 55% by weight of the reaction product was impregnated in 100 parts of a reinforced porous material consisting of reclaimed felt having a thickness of 15 mm and glass fiber non-woven material using a chloroprene adhesive having heat resistance as a binder and laminated on one side of the reclaimed felt.

The above described reclaimed felt was continuously dried in a drying chamber at 90 °C for 10 minutes and the resulting laminated felt was wound. The laminated felt was cut to prepare test pieces having a predetermined shape and each test piece was molded by a hot-press. The results are shown in TABLE 3.

### [EXAMPLE 6]

20 parts of a styrene-butadiene rubber latex (55% by weight, Butadiene content 80% by weight) was added to 100 parts of an aqueous solution of the reaction product of EXAMPLE 5. Using the above described binder, the porous material of EXAMPLE 5 was molded by the same method as EXAMPLE 5. The results are shown in TABLE 3.

### [COMPARISON 2]

Using 55% by weight of the aqueous solution of a resol type condensation product of phenol · formaldehyde, the porous material of EXAMPLE 5 was molded by the same method as EXAMPLE 5. The results are shown in TABLE 3.

**[TABLE 3]**

| Samples | Press condition | Bending strength (kg/cm²) | Flexibility angle (ϑ ) |
|---|---|---|---|
| EXAMPLE 5 | 135°C × 3 mins | 210 | 45 |
| EXAMPLE 6 | 135°C × 3 mins | 195 | 85 |
| EXAMPLE 2 | 190°C × 3 mins | 170 | 20 |

### Molding condition:

Using a hot-press and the thickness of the molded porous material was reduced to 2 mm.

### Bending strength:

Same as TABLE 2.

### Flexibility:

Test pieces S (50 mm width× 300 mm length) were set as shown in Fig. 1, and a load was effected on Point A of each of the test pieces S and an angle (ϑ ) was determined when the test piece were broken at Point B.

Referring to TABLE 3, it is recognized that the hardness of the resorcinol resin compound including the methylol group can be controlled by a suitable synthetic resin and in this case, a material for a structure having good flexibility is obtained.

On the contrary, it is recognized that when phenol resin is used as a binder it is hard and brittle in COMPARISON 2. Further, in EXAMPLE 5, wherein the surface material and the reinforcing material were previously laminated on the porous material by the adhesive, when the binder was impregnated or during drying, peeling or slipping of the surface material or the reinforcing material by swelling did not arise and the molded porous material had a good dimensional stability and workability.

### [EXAMPLE 7]

A surface material consisting of a polyvinyl-chloride sheet and a polyurethane foam laminated on the back of the polyvinyl-chloride sheet was laminated on the surface of each polyester fiber porous material in which the condensation product was impregnated, and dried in EXAMPLE 1, 2 and COMPARISON 1 and the laminated porous material was molded. The results are shown in TABLE 4.

**[TABLE 4]**

| Samples | Press temperature (°C) | Press time | Molding state |
|---|---|---|---|
| EXAMPLE 1 | 140 | 1 | ⃝ |
| | 135 | 1 | Ⓞ |
| | 130 | 2 | Ⓞ |
| | 140 | 1 | ⃝ |
| EXAMPLE 2 | 135 | 2 | Ⓞ |
| | 130 | 1 | Ⓞ |
| | 180 | 1 | X X |
| CCMPARISON 1 | 140 | 1 | X |

### Molding State:

- Ⓞ :: No defect is observed in the surface material and the polyurethane foam on the back of the polyvinyl-chloride sheet of the surface material is molded together with the porous material.
- ⃝ :: The surface material is molded together with the porous material but the polyvinyl-chloride sheet of the surface material has a slight gloss.
- X :: The condensation product is not cured and the porous material cannot be molded.
- X X :: The condensation product is cured, but the polyvinyl-chloride sheet of the surface material is melted and deformed.

Referring to TABLE 4, it is recognized that in the traditional case, using phenol resin as a binder, a high temperature is necessary to mold the porous material, so a surface material having poor heat resistance cannot be molded together with the porous material. Nevertheless, in a case where the binder of the present invention is used, a surface material having poor heat resistance can be molded together with the porous material. Further, it is also recognized that in a case where the resorcinol or the primary condensation product of resorcinol is the alkylresorcinol or the primary condensation product of alkylresorcinol, the binder can be cured at a lower temperature.

### [EXAMPLE 8]

50% weight of an aqueous solution of a binder was prepared by mixing 20 parts of alkylresorcinol in 80 parts of a primary condensation product of phenol folmaldehyde, and incubating the above described mixture at 60°C for 8 hours and the binder solution was impregnated in a polyurenthane foam sheet having a thickness of 15 mm in the amount of 50 g solid/m ² and a glass cloth (130 g/m² ) as a reinforcing material were laminated on both sides of the polyurethane foam sheet. The resulting reinforced polyurethane foam sheet was molded by a hot-press at 140 °C for 3 minutes to reduce its thickness to 5 mm. Thus, a material for a structure having good dimensional stability and a high rigidity was produced.

### [EXAMPLE 9]

60% by weight of an aqueous solution of a binder was prepared by mixing 30 parts of 5-methylresorcinol, 10 parts of 37% formaldehyde aqueous solution, and 0.5 part of aceton, and the above described mixture was incubated at 80°C for 4 hours. 300 parts of water was added to 100 parts of the resulting binder solution and the diluted binder solution was coated on reclaimed felt (thickness 20 mm, 150 g/m ² ) in the amount of 50 g/m ² and the resulting felt was dried at 80°C for 10 minutes. After then, the felt was molded at 135°C for 3 minutes to reduce the thickness to 10 mm, and thus a material for a structure having a good dimensional stability and high rigidity was produced.

### [EXAMPLE 10]

50% weight of an aqueous solution of a binder was prepared by mixing 30 parts of a primary condensation product of methylol urea and 70 parts of a primary condensation product of resorcinol-formaldehyde, and the above described mixture was incubated at 70°C for 5 hours. 80 parts of water was added in 20 parts of the resulting binder solution, and the diluted solution was coated on a glass fiber sheet (150 g/m ² ) in an amount of 20 g/m² and the coated sheet was dried at 80°C for 5 minutes, and then molded by a hot-press at 135°C for 1 minute to reduce the thickness to 3 mm, and a material for a structure having good dimensional stability and high rigidity was produced.

## Claims

1. A material for a structure produced by mixing a compound containing a methylol group and a resorcinol compound and/or a primary condensation product of the resorcinol compound and formaldehyde in a porous material, and molding the above described porous material with heating to cure the condensation product.

2. A material for a structure in accordance with claim 1, the porous material is made of a plastic foam.

3. A material for a structure in accordance with claim 1, the porous material is made of a fiber.

4. A material for a structure in accordance with claim 1, a reinforcing material is laminated on one or both side(s) of the porous material.
